# FASCICULE DE BREVET EUROPEEN

(11) **EP 1 352 523 B1**
(45) Date de publication et mention de la délivrance du brevet: **04.08.2004**
(21) Numéro de dépôt: 02729493.3
(22) Date de dépôt: 15.01.2002
(51) Int. Cl.: H04N 7/167

(54) **METHODE POUR STOCKER DES DONNEES ENCRYPTEES**
VERFAHREN ZUM SPEICHERN VERSCHLÜSSELTER DATEN
METHOD FOR STORING ENCRYPTED DATA

(30) Priorité: 16.01.2001 CH 612001
(43) Date de publication de la demande: 15.10.2003
(73) Titulaire: Nagracard S.A., 1033 Cheseaux-sur-Lausanne (CH)
(72) Inventeur: NICOLAS, Christophe, CH-1028 Préverenges (CH)
(74) Mandataire: Wenger, Joel-Théophile
(86) Numéro de dépôt international: PCT/IB2002/000106
(87) Numéro de publication internationale: WO 2002/056592

(56) Documents cités:
- EP-A- 0 809 402
- EP-A- 0 912 052
- WO-A-00/22777
- FR-A- 2 732 537

## Description

La présente invention concerne l'encryptage des données, en particulier la transmission de données encryptées sur des réseaux ouverts.

Lorsque l'on souhaite garantir que seul le ou les destinataires visés pourront exploiter les données transmises sur des réseaux ouverts (câble, satellite, onde hertzienne ou Internet), le moyen le plus approprié est d'encrypter ces données et de s'assurer que seul le ou les destinataires autorisés possèdent les moyens pour les décrypter.

Malgré les algorithmes utilisés, il est admis qu'il est possible pour un tiers disposant de puissance de calculs importants, de décrypter ces données.

C'est pourquoi les systèmes actuels intègrent un mécanisme de changement de clé fréquent décourageant de ce fait les éventuels attaquants. Chaque attaque, ne portant dès lors que sur une petite portion des données et ne permettant de ce fait d'accéder, après décryptage, qu'à quelques secondes de transmission.

Cette méthode est utilisée pour la diffusion de télévision à péage, la clé appelée "mot de contrôle" n'ayant une durée de vie que de quelques secondes. Ces données sont dites "à consommation immédiate" et la clé correspondante est envoyée en parallèle.

L'avènement des moyens de stockage et la possibilité de visualiser (ou exploiter) ces données à un moment quelconque, à quelque peu modifié la situation.

Afin de satisfaire d'avantage la clientèle, il est désormais possible d'envoyer des données encryptées sur un réseau de distribution comprenant un grand nombre d'utilisateurs, données qui sont stockées dans l'unité de stockage de l'unité de l'utilisateur. Ces données sont accompagnées d'un fichier contenant les clés de décryptage, ce fichier étant lui-même encrypté selon un algorithme et des clés contenues dans un module de sécurité de l'utilisateur.

Ce module de sécurité a généralement la forme d'une carte à puce disposant, dans sa mémoire, des clés propres à décrypter des données.

Pour la suite de l'exposé, les données définissant le produit soumis à accès conditionnel seront appelées "données produit. Par "données produit" il peut s'agir d'un film, d'une retransmission sportive, d'un jeu ou d'un logiciel.

On considérera le fait qu'un grand nombre d'unités d'utilisateur contiennent dans leur unité de stockage les mêmes "données produit" et le fichier de clés.

Si l'utilisateur décide d'acheter ce produit, le module de sécurité recevra les instructions nécessaires pour décrypter le fichier des clés et fournir en temps utile les clés pour décrypter les "données produit".

Un tiers malveillant va donc s'attaquer au fichier des clés qui est encrypté par une clé unique alors que les "données produit" sont encryptées par un grand nombre de clés.

De plus, la taille du fichier des clés est faible en comparaison de la taille des données produit. Pour information la taille d'un film sous forme encryptée est d'environ 1 Giga Octets; sous forme décryptée et décompressée, ce même peut représente une taille de 10 GigaOctets.

Ainsi, lorsque ce tiers aura réussi à décrypter le fichier des clés, cette information pourra circuler facilement par Internet par exemple permettant de ce fait à d'autres personnes, par le biais d'un décodeur modifié, de décrypter les "données produit".

Il faut savoir que le décodeur reçoit un flux de données dont le format est propriétaire du diffuseur. Ceci signifie qu'il est très difficile d'isoler les différents paquets d'informations pour obtenir les "données produit" sous forme encryptée à ce stade. C'est pourquoi l'attaque se fait sur l'unité de stockage ou disque dur, qui, pour des raisons économiques évidentes, est de type standard (IDE par exemple). Ce disque est ensuite transféré sur un ordinateur personnel pour recevoir par d'autres voies, le fichier des clés.

Dans le but similaire de permettre le stockage d'un produit sur un disque dur et de la visualiser plus tard, une première approche a été décrite dans le document FR-A-2 732 537. Le problème que cherche à résoudre ce document est la durée de validité limitée des clés transmises avec les données. C'est pourquoi, la solution proposée est de décrypter le fichier contenant les clés (CW) et de les ré-encrypter avec une clé locale pour permettre ainsi l'utilisation des données en tout temps. Il est à noter que les données quant à elle sont stockées dans le même état qu'à leur entrée dans le décodeur.

La variante décrite dans le document EP-A-0 912 052 varie dans le sens ou la clé de ré-encryption locale est stockée dans une carte à puce.

Dans le document EP-A-1 122 910 (correspondant au document WO-A-00/22777) il est décrit de décrypter dans un décodeur des données encryptées reçues et les ré-encrypter et surencrypter avant leur stockage.

Ces trois documents ne permettent pas de résoudre le problème de la vulnérabilité des données lorsqu'elles sont stockées sur un support facilement accessible.

Le but de la présente invention est d'empêcher que le décryptage d'un fichier de clés ou de données permette à de nombreux utilisateurs malveillants de bénéficier des "données produit" illicitement.

Ce but est atteint par une méthode de stockage de données extraites d'un flux de données encryptées envoyées à un décodeur connecté à un module de sécurité et connecté à une unité de stockage (DB), la méthode consistant à re-encrypter, sans décryptage intermédiaire, dans le décodeur les données encryptées envoyées au décodeur avant leurs transferts dans l'unité de stockage (DB) par au moins une clé (K1, K2) unique.

Ainsi, les données de chaque unité de stockage sont uniques au décodeur considéré et le décryptage d'un fichier de clés ne permet plus de décrypter les "données produit".

Le flux de données entrant dans le décodeur est premièrement interprété pour isoler les parties constituant les "données produit". Celles-ci sont encryptées par une première clé qui est contenue dans le décodeur.

Du fait que le décodeur n'est pas considéré comme inviolable, il est possible d'utiliser en lieu et place ou additionnellement à la première clé, une clé contenue dans un module de sécurité.

La présente invention sera mieux comprise à la lumière des figures annexées, prise à titre non limitatif, dans lesquelles:
- la figure 1 illustre les différents composants d'un décodeur,
- la figure 2 illustre les opérations selon l'invention.

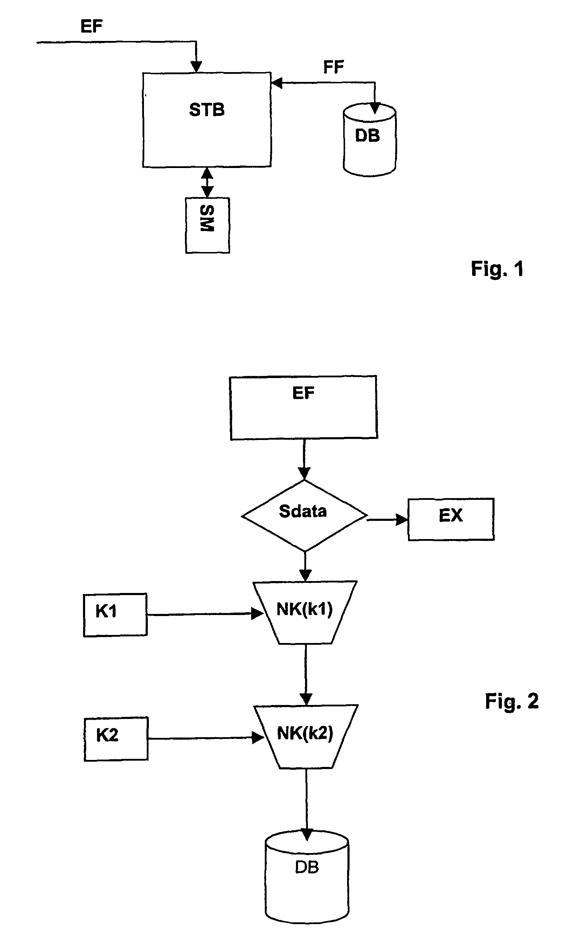

La figure 1 illustre le flux entrant EF dans le décodeur STB pour traitement. Les données qui sont à stocker, sont isolées selon le format propre aux données destinées à la mémorisation, et envoyées à un module d'encryption avant d'être transférées. Ce module utilise la clé K1 fournie par le module de sécurité SM, généralement sous la forme d'une carte à puce, connecté au décodeur. Cette carte est réputée inviolable et les différents échanges entre cette dernière et le décodeur STB sont encryptés par une clé propre à ces deux éléments. Il n'est dès lors pas possible de lire les informations échangées pour alimenter un décodeur modifié par exemple. Une fois les données encryptées, elles sont transmises par la voie FF à l'unité de stockage DB.

La clé K1 délivrée par le module de sécurité SM, peut être combinée avec une deuxième clé K2 propre au décodeur. De ce fait, le déplacement du module de sécurité SM avec le contenu des données stockée DB ne permet pas de décrypter ces données.

Ces clés sont uniques c'est-à-dire que chaque décodeur ou module de sécurité utilise une clé différente. Selon le mode de génération choisi, cette clé est générée aléatoirement lors d'une phase d'initialisation ou soit envoyée par le centre de gestion du système.

La figure 2 représente sous la forme d'un diagramme, le même traitement avec le flux entrant EF qui passe par un premier filtre Sdata. Ce filtre isole les données destinées au stockage; les données servant à d'autres buts sont dirigées vers d'autres traitements par la sortie EX.

Une première étape d'encryptage NK(K1) est alors réalisée avec une première clé K1 provenant du module de sécurité SM. Ces données sont alors envoyées à un deuxième module d'encryption NK(K2) alimenté par une deuxième clé K2 provenant du décodeur STB.

Ces clés fournies par le décodeur STB et le module de sécurité SM, sont utilisées dans un ordre quelconque.

Selon une forme de réalisation, le module d'encryptage se trouve directement dans l'interface entre le décodeur et le module de stockage. Ainsi, c'est à un niveau logique bas que cette encryption est réalisée et d'une manière indépendante du programme de gestion central du décodeur.

Selon une autre forme de l'invention, le module de sécurité SM dispose de moyens d'encryptage suffisamment puissants pour recevoir le flux de données à encrypter et retourner les données sous forme encryptées. Dans ce cas, c'est le module de sécurité SM seul qui contient et utilise la clé d'encryptage.

L'encryptage des données peut être exécuté une première fois sur la base d'une première clé K1 provenant du module de sécurité SM puis sur la base d'une deuxième clé K2 provenant du décodeur STB. De plus, selon les capacités du module de stockage, celui-ci peut également fournir une clé K3 permettant d'encrypter les données avec cette clé.

Il sera donc nécessaire de réunir ces trois éléments pour que le décryptage soit possible.

Ce principe peut être étendu à tout éléments capable de stocker une clé propre, cette clé étant alors utilisée pour une nouvelle couche d'encryptage des données.

Dans la plupart des cas, l'utilisation des données stockées selon la méthode décrite précédemment est soumise à l'obtention d'un droit. Ce droit est obtenu auprès d'un centre de gestion et peut être acquis avant ou après le téléchargement des "données produits". Ce droit contient un descripteur du produit et une clé de décryptage des mots de contrôle.

Selon notre invention au moins une étape de surencryptage est soumise à une clé contenue dans le module de sécurité (SM) où se trouve également les droits pour l'utilisation des données. Lors de l'opération de décryptage des données stockées sur les moyens de stockage, la clé K1 n'est fournie au module de décryptage que si la vérification sur le droit d'utilisation est positif. Ainsi, les données DB ne retrouvent la forme telle qu'envoyées que pour autant que l'utilisateur dispose du droit d'utilisation.

Selon cette forme de réalisation, les données DB sont accompagnées par un descriptif en clair décrivant les droits nécessaires pour ces données. Le module de sécurité SM, avant de décrypter par la clé K1, vérifie ces informations avec celles contenues dans sa mémoire sécurisée.

## Revendications

1. Méthode de stockage de données extraites d'un flux de données encryptées envoyées à un décodeur (STB) connecté à un module de sécurité (SM) et connecté à une unité de stockage (DB), la méthode consistant à surencrypter, sans décryptage intermédiaire, dans le décodeur les données encryptées envoyées au décodeur avant leurs transferts dans l'unité de stockage (DB) par au moins une clé (K1, K2) unique.

2. Méthode selon la revendication 1, **caractérisée en ce qu'**elle consiste à utiliser comme clé unique, une clé (K1) propre au module de sécurité (SM).

3. Méthode selon la revendication 1, **caractérisée en ce qu'**elle consiste à utiliser comme clé unique, une clé (K2) propre au décodeur (STB).

4. Méthode selon la revendication 1, **caractérisée en ce qu'**elle consiste à successivement encrypter les données par plusieurs clés, soit la clé (K1) du module de sécurité et la clé (K2) du décodeur ou inversement.

5. Méthode selon les revendications 1 à 4, **caractérisée en ce qu'**elle consiste à encrypter les données destinées au stockage par une clé (K3) d'encryption contenue dans le module de stockage (DB).

6. Méthode selon l'une des revendications 1 ou 2, **caractérisée en ce que** lès données à encrypter sont envoyées au module de sécurité (SM) pour être encryptées, les données encryptées étant ensuite dirigées vers l'unité de stockage (DB).

7. Méthode selon l'une des revendications 1 à 3, **caractérisée en ce qu'**elle consiste à intégrer dans une interface bas niveau entre l'unité de stockage (DB) et le décodeur (STB), l'exécution de l'encryptage ou du décryptage.

## Patentansprüche

1. Verfahren der Speicherung von Daten, die aus einem Fluss von verschlüsselten Daten herausgezogen werden, die an einen Dekodierer (STB) geschickt werden, der mit einem Sicherheitsmodul (SM) und mit einer Speichereinheit (DB) verbunden ist, wobei das Verfahren darin besteht, die dem Dekodierer übersandten verschlüsselten Daten ohne Zwischenentschlüsselung im Dekodierer vor ihrer Überführung in die Speichereinheit (DB) mit zumindest einem einmaligen Schlüssel (K1, K2) zu verschlüsseln.

2. Verfahren nach Anspruch 1, **dadurch gekennzeichnet, dass** es darin besteht, einen dem Sicherheitsmodul (SM) eigenen Schlüssel (K1) als den einmaligen Schlüssel zu verwenden.

3. Verfahren nach Anspruch 1, **dadurch gekennzeichnet, dass** es darin besteht, einen dem Dekodierer (STB) eigenen Schlüssel (K2) als den einmaligen Schlüssel zu verwenden.

4. Verfahren nach Anspruch 1, **dadurch gekennzeichnet, dass** es darin besteht, die Daten nacheinander mit mehreren Schlüsseln zu verschlüsseln, nämlich dem Schlüssel (K1) des Sicherheitsmoduls und dem Schlüssel (K2) des Dekodierers, oder umgekehrt.

5. Verfahren nach den Ansprüchen 1 bis 4, **dadurch gekennzeichnet, dass** es darin besteht, die zu speichernden Daten mit einem Verschlüsselungsschlüssel (K3) zu verschlüsseln, der im Speichermodul (DB) enthalten ist.

6. Verfahren nach einem der Ansprüche 1 oder 2, **dadurch gekennzeichnet, dass** die zu verschlüsselnden Daten zum Sicherheitsmodul (SM) geschickt werden, um verschlüsselt zu werden, wobei die verschlüsselten Daten dann zur Speichereinheit (DB) geleitet werden.

7. Verfahren nach einem der Ansprüche 1 bis 3, **dadurch gekennzeichnet, dass** es darin besteht, die Ausführung der Verschlüsselung oder Entschlüsselung in eine Schnittstelle niedrigen Niveaus zwischen der Speichereinheit (DB) und dem Dekodierer (STB) zu integrieren.

## Claims

1. A storing method of data extracted from an encrypted data stream sent to a decoder (STB) connected to a security module (SM) and connected to a storing unit (DB). this method consisting in re-encrypting, without previous decryption, in the decoder the encrypted data sent to the decoder before they are transferred to the storing unit (DB) by at least one specific key (K1, K2).

2. A method according to Claim 1, **characterised in that** it consists in using as a single key a key (K1) specific to the security module (SM).

3. A method according to Claim 1, **characterised in that** it consists in using as a single key a key (K2) specific to the decoder (STB).

4. A method according to Claim 1, **characterised in that** it consists in successively encrypting the data by several keys, either the key (K1) of the security module and the key (K2) of the decoder or inversely.

5. A method according to Claims 1 to 4, **characterised in that** it consists in encrypting the data destined to the storing unit (DB) by an encryption key (K3) contained in the storing unit (DB).

6. A method according to one of the Claims 1 or 2, **characterised in that** the data to be encrypted are sent to the security module (SM) to be encrypted, the encrypted data are then directed towards the storing unit (DB).

7. A method according to one of the Claims 1 to 3, **characterised in that** it consists in executing the encryption or the decryption in a low level interface located between the storing unit (DB) and the decoder (STB).
